# EUROPÄISCHE PATENTSCHRIFT

(11) **EP 4 052 064 B1**
(45) Veröffentlichungstag und Bekanntmachung des Hinweises auf die Patenterteilung: **16.04.2025**
(21) Anmeldenummer: 20800547.0
(22) Anmeldetag: 14.10.2020
(51) Int. Cl.: G01S 7/41, G01S 13/58, G01S 13/86, G01S 13/87, G01S 13/931, G01S 13/42, G01S 7/48, G01S 17/931

(54) **VERFAHREN ZUM VERFOLGEN EINES ENTFERNTEN ZIELFAHRZEUGS IN EINEM UMGEBUNGSBEREICH EINES KRAFTFAHRZEUGS MITTELS EINER KOLLISIONSERKENNUNGSVORRICHTUNG**
METHOD FOR TRACKING A REMOTE TARGET VEHICLE IN AN AREA SURROUNDING A MOTOR VEHICLE BY MEANS OF A COLLISION DETECTION DEVICE
PROCÉDÉ DE LOCALISATION D'UN VÉHICULE CIBLE À DISTANCE DANS UNE ZONE ENTOURANT UN VÉHICULE AUTOMOBILE AU MOYEN D'UN DISPOSITIF DE DÉTECTION DE COLLISION

(30) Priorität: 31.10.2019 DE 102019216805
(43) Veröffentlichungstag der Anmeldung: 07.09.2022
(73) Patentinhaber: Continental Automotive Technologies GmbH, 30175 Hannover (DE)
(72) Erfinder: KAMANN, Alexander, 85049 Ingolstadt (DE); NAUMANN, Robert, 85049 Ingolstadt (DE); STEINHAUSER, Dagmar, 85049 Ingolstadt (DE); BRANDMEIER, Thomas, 85049 Ingolstadt (DE); FORSTER, Andreas, 90411 Nürnberg (DE); FAISST, Holger, 90411 Nürnberg (DE); GRUSON, Frank, 90411 Nürnberg (DE)
(74) Vertreter: Continental Corporation
(86) Internationale Anmeldenummer: PCT/DE2020/200084
(87) Internationale Veröffentlichungsnummer: WO 2021/083464

(56) Entgegenhaltungen:
- EP-A1- 2 538 239
- EP-A1- 3 285 230
- DE-A1- 102012 021 461
- DE-A1- 102018 206 500
- US-A1- 2016 291 145

## Beschreibung

Die Erfindung betrifft ein Verfahren zum Verfolgen eines entfernten Zielfahrzeugs in einem Umgebungsbereich eines Kraftfahrzeugs mittels einer Kollisionserkennungsvorrichtung des Kraftfahrzeugs zur Erkennung einer bevorstehenden Kollision mit dem Zielfahrzeug gemäß dem Oberbegriff des Anspruchs 1. Die Erfindung betrifft weiterhin eine Kollisionserkennungsvorrichtung für ein Kraftfahrzeug zur Erkennung einer bevorstehenden Kollision mit einem entfernten Zielfahrzeug.

In modernen Kraftfahrzeugen werden zunehmend Sensoren zum Erfassen der Umgebung und insbesondere der Verkehrssituation und anderer Verkehrsteilnehmer eingesetzt. Solche Umgebungssensoren sind üblicherweise Bestandteil einer Kollisionserkennungsvorrichtung zur Erkennung einer bevorstehenden Kollision. Als Umgebungssensoren werden dabei regelmäßig Radarsensoren, Lidarsensoren, Kamerasensoren oder dergleichen eingesetzt. Die Umgebungserfassung mittels eines Radarsensoren beispielsweise basiert auf der Aussendung von gebündelten elektromagnetischen Wellen und deren Reflexion, insbesondere durch Randbebauung der Fahrbahn oder andere Fahrzeuge.

Aus dem Stand der Technik ist es ferner bekannt, ein passives Sicherheitssystem eines Kraftfahrzeugs, beispielsweise einen Airbag oder einen Gurtstraffer, bei einer Kollision mit einem Kollisionsobjekt, beispielsweise einem Fahrzeug, zu aktivieren. Das Sicherheitssystem löst dabei üblicherweise kurz nach dem Aufprallzeitpunkt aus, d. h. erst wenn die Kollision bereits erfolgt ist. Es sind jedoch, wie oben ausgeführt, bereits Kollisionserkennungsvorrichtungen bekannt, welche durch entsprechende Sensoren und Auswertung deren Signale einen Zeitpunkt erkennen, bei dem ein Aufprall unvermeidbar ist. Dieser Zeitpunkt liegt in der sogenannten Pre-Crash-Phase und damit vor dem eigentlichen Kollisionszeitpunkt. Mit dieser Information wird das Sicherheitssystem bereits kurz vor der Kollision aktiviert, um so die Insassen eines Kraftfahrzeugs noch besser vor Verletzungen schützen zu können.

Im Hinblick auf die Aktivierung eines passiven Sicherheitssystems, insbesondere in der Pre-Crash-Phase, ist es von Vorteil, wenn nicht nur kollisionsrelevante Daten des eigenen Kraftfahrzeugs bekannt sind, sondern auch kollisionsrelevante Daten eines Zielfahrzeugs bekannt sind, mit welchem eine Kollision bevorsteht. Solche kollisionsrelevanten Daten eines Zielfahrzeugs sind beispielsweise Geschwindigkeit, Beschleunigung, Gierrate und Radlenkwinkel. Da sich diese kollisionsrelevanten Daten insbesondere unmittelbar vor einer Kollision noch sehr stark ändern können, beispielsweise durch ein starkes Lenk- und/oder Bremsmanöver oder eine Schleudersituation, ist es für eine möglichst exakte Ermittlung der Daten wesentlich, das Zielfahrzeug auch in einem Nahbereich des Kraftfahrzeugs insbesondere unterhalb von etwa 2 m hinreichend zuverlässig zu verfolgen.

Die US 2016/291145 A1 beschreibt ein gattungsbildendes Verfahren zum Verfolgen eines entfernten Fahrzeugs, welches in einer lateralen Position relativ zu einem Host-Fahrzeug fährt, wobei Zieldaten von zwei Radarsensoren bereitgestellt werden, die einem Objekterfassungsfusionssystem des Host-Fahrzeugs zugeführt werden. Die Räder an dem entfernten Fahrzeug werden als Gruppierung von Radarpunkten, welche im Wesentlichen den gleichen Ort, aber im Wesentlichen verschiedene Doppler-Abstandsänderungswerte aufweisen, identifiziert. Hierzu werden Radarpunkte in Cluster gruppiert basierend auf einer positionellen Nähe und es wird für jedes Cluster der Doppler-Wert von allen Radarpunkten des entsprechenden Clusters bewertet, wobei diejenigen Cluster, die deutlich unterschiedliche Doppler- Abstandsänderungswerte aufweisen, als ein Rad bestimmt werden. Falls beide Räder auf der nahen Seite des entfernten Fahrzeugs identifiziert werden können, wird unter Verwenden der Radpositionen, welche durch beide Radarsensoren gemessen werden, eine Fusionsberechnung durchgeführt, welche eine genaue Abschätzung der Position, Ausrichtung und Geschwindigkeit des entfernten Fahrzeugs ergibt. Die Position, Ausrichtung und Geschwindigkeit des entfernten Fahrzeugs werden verwendet, um Warnungen oder Ausweichmanöver in einem System zur lateralen Kollisionsverhinderungssystem auszulösen.

Die EP 3 285 230 A1 beschreibt ein Verfahren zum Bestimmen eines Bewegungszustands eines Objekts, insbesondere eines Fahrzeugs, außerhalb eines Host-Fahrzeugs, wobei basierend auf erfassten Daten eines Radarsensors sowie einer Kamera und/oder eines Lidarsensors des Host-Fahrzeugs mehrere Merkmalspunkte an dem Objekt und deren jeweilige Positionen und Geschwindigkeiten bestimmt werden. Basierend auf den ermittelten Positionen und Geschwindigkeiten werden eine Referenzposition, eine Referenzgeschwindigkeit und eine Referenzwinkelgeschwindigkeit, die einen Bewegungszustand für das Objekt darstellen, bestimmt.

In der DE 10 2012 021 461 A1 ist ein Verfahren zur Klassifikation von Fahrzeugen beschrieben, wobei mittels zumindest eines Radarsensors zumindest ein Rad eines Fahrzeugs erfasst wird. Dabei wird mittels des Radarsensors aus mehreren Streuzentren des Rades ein superpositioniertes Gesamtsignal erzeugt, welches aus einem charakteristischen Verlauf von den Streuzentren reflektierter Radarstrahlung während einer Drehung des Rades gebildet wird. Aus dem Gesamtsignal wird dann eine von den Streuzentren abhängige Signatur des Rades ermittelt, wobei aus der Signatur eine Radgröße abgeleitet wird, anhand welcher eine Fahrzeuggröße, eine Fahrzeugmasse und/oder Fahrzeugkategorie ermittelt werden.

Die EP 2 538 239 A1 beschreibt ein Verfahren zur Detektion von Rädern eines Fahrzeugs mit einem stationären Radarsensor oder Lidarsensor. Dabei wird eine elektromagnetischen Messstrahlkeule mit einem bekannten zeitlichen Verlauf ihrer Frequenz von der Seite der Fahrbahn her auf einen Bereich über einer Fahrbahn ausgesendet und eine von einem passierenden Fahrzeug reflektierte Messstrahlkeule empfangen und alle ihre Frequenzen im zeitlichen Verlauf relativ zum bekannten Verlauf aufgezeichnet und ausgewertet. Ein Rad wird detektiert, wenn eine während der Fahrzeugpassage auftretende Frequenzaufspreizung im aufgezeichneten Verlauf ein als Referenz vorgegebenes Spreizmaß übersteigt.

Ausgehend hiervon ist es Aufgabe der Erfindung, ein Verfahren zum Verfolgen eines entfernten Zielfahrzeugs in einem Umgebungsbereich eines Kraftfahrzeugs sowie eine entsprechende Kollisionserkennungsvorrichtung anzugeben, mittels dem eine hinreichend genaue Verfolgung des Zielfahrzeugs in einem Nahbereich und basierend darauf insbesondere eine hinreichend genaue Ermittlung von kollisionsrelevanten Daten möglich ist.

Die vorstehende Aufgabe wird durch die gesamte Lehre des Anspruchs 1 sowie des nebengeordneten Anspruchs 17 gelöst. Zweckmäßige Ausführungsformen und Weiterbildungen der Erfindung sind in den Unteransprüchen und der nachfolgenden Beschreibung dargelegt.

Bei dem erfindungsgemäßen Verfahren zum Verfolgen eines entfernten Zielfahrzeugs in einem Umgebungsbereich eines Kraftfahrzeugs mittels einer Kollisionserkennungsvorrichtung des Kraftfahrzeugs zur Erkennung einer bevorstehenden Kollision mit dem Zielfahrzeug durch Fusion von Radarsensordaten eines als Radarsensor ausgebildeten ersten Umgebungssensors mit Sensordaten eines zweiten Umgebungssensors der Kollisionserkennungsvorrichtung weist der Radarsensor und der zweite Umgebungssensor jeweils Erfassungsbereiche auf, welche sich derart überlappen, dass wenigstens ein Teilbereich des Zielfahrzeugs durch beide Umgebungssensoren erfasst wird. Dabei umfasst das Verfahren folgende Schritte:
- Bereitstellen von Radarsensordaten und Sensordaten des Zielfahrzeugs mittels des Radarsensors und des zweiten Umgebungssensors, wobei aus den Radarsensordaten Radarreflexionspunkte abgeleitet werden, welche eine durch eine Entfernung und einen Azimutwinkel festgelegte Position und eine Dopplergeschwindigkeit von Punkten an dem Zielfahrzeug bestimmen,
- Identifizieren eines Rads des Zielfahrzeugs aus den Radarreflexionspunkten,
- Bereitstellen von ersten Raderfassungsdaten basierend auf dem aus den Radarreflexionspunkten identifizierten Rad,
- Identifizieren eines Rads des Zielfahrzeugs aus den Sensordaten des zweiten Umgebungssensors und Bereitstellen von zweiten Raderfassungsdaten basierend auf dem aus den Sensordaten identifizierten Rad,
- Zusammenführen der ersten Raderfassungsdaten und der zweiten Raderfassungsdaten,
- Ermitteln eines Parameters des Zielfahrzeugs basierend auf den zusammengeführten ersten und zweiten Raderfassungsdaten.

Erfindungsgemäß umfasst das Identifizieren eines Rads des Zielfahrzeugs, dass um jeden Radarreflexionspunkt jeweils ein einheitlich großes zweidimensionales Fenster mit einer Erstreckung in der Entfernungsdimension und der Azimutwinkeldimension gelegt und eine Summe der Varianzen der Dopplergeschwindigkeiten aller in dem Fenster enthaltenen Radarreflexionspunkte ermittelt und dem entsprechenden Radarreflexionspunkt zugeordnet wird, und dass ein Radarreflexionspunkt als ein Punkt eines Rads bestimmt wird, dessen zugeordnete Summe größer als ein vorgegebener Schwellwert ist

Die Erfindung geht dabei zunächst von der Überlegung aus, dass die Genauigkeit der Verfolgung eines entfernten Zielfahrzeugs erhöht werden kann, wenn die Verfolgung nicht lediglich auf den Sensordaten eines einzigen Umgebungssensors beruht. Weiter geht die Erfindung von der Überlegung aus, dass ein Rad eines Zielfahrzeugs eine besondere Bewegungscharakteristik aufweist, welche sich aufgrund des Mikro-Doppler-Effekts in den mittels eines Radarsensors erfassten Radarsensordaten widerspiegelt und wodurch ein Rad und basierend darauf ein Parameter des Zielfahrzeugs zuverlässig identifizierbar sind. Dabei wird die Tatsache genutzt, dass die Bewegung eines Rads von der Bewegung der Karosserie des Zielfahrzeugs abweicht bzw. zusätzlich zur Bewegung der Karosserie des Zielfahrzeugs rotiert und dies eine auswertbare Dopplermodulationen um die hauptsächliche Dopplerverschiebung erzeugt.

Daher sieht die Erfindung die Verwendung von zwei Umgebungssensoren zur Identifizierung eines Rads des Zielfahrzeugs und eine Fusion der entsprechenden Sensordaten vor, wobei ein erster Umgebungssensor als Radarsensor ausgebildet ist. Ein besonders zuverlässiges Identifizieren eines Rads mittels Radarsensor wird dabei dadurch erreicht, dass um jeden Radarreflexionspunkt jeweils ein einheitlich großes zweidimensionales Fenster mit einer Erstreckung in der Entfernungsdimension und der Azimutwinkeldimension gelegt und eine Summe der Varianzen der Dopplergeschwindigkeiten aller in dem Fenster enthaltenen Radarreflexionspunkte ermittelt und dem entsprechenden Radarreflexionspunkt zugeordnet wird, wobei ein Radarreflexionspunkt als ein Punkt eines Rads bestimmt wird, dessen zugeordnete Summe größer als ein vorgegebener Schwellwert ist. Es wird also die Abweichung der Geschwindigkeitsanteile verursacht durch ein (rotierendes) Rad ermittelt und bewertet. Hierbei ist vorgesehen, dass durch das einheitlich große zweidimensionale Fenster, welches über jeden Radarreflexionspunkt gelegt wird, eine Art Normierung erfolgt und jedem Radarreflexionspunkt mit der Summe der Varianzen der Dopplergeschwindigkeiten aller in dem Fenster enthaltenen Radarreflexionspunkte eine weitere Kenngröße zugeordnet wird, welche eine zuverlässige Bewertung ermöglicht.

Die erfindungsgemäße Ausgestaltung hat den Vorteil, dass dadurch ein Verfahren bereitgestellt wird, mittels dem eine hinreichend genaue Verfolgung des Zielfahrzeugs in einem Nahbereich und basierend darauf insbesondere eine hinreichend genaue Ermittlung von kollisionsrelevanten Daten möglich ist.

Im Rahmen dieser Erfindung kann unter einem Ermitteln beispielsweise ein Berechnen verstanden werden. Ein solches Berechnen kann beispielsweise in einem Mikrocontroller, einem Mikroprozessor oder einer anderen programmierbaren oder fest verdrahteten Einheit erfolgen. Es sei zudem verstanden, dass das entfernte Zielfahrzeug, welches verfolgt wird, typischerweise nicht das Fahrzeug ist, welches das Verfahren ausführt.

Ein Ermitteln oder Berechnen kann insbesondere auch so verstanden werden, dass dabei nicht nur ein Datum bzw. Daten als solche ermittelt werden, sondern diese als Wahrscheinlichkeitsverteilung oder in anderer Weise mit Bezug auf die Wahrscheinlichkeiten für das Eintreffen bestimmter Werte ermittelt bzw. berechnet werden. Beispielsweise können entsprechende Werte auch abgeschätzt werden.

Bevorzugt werden sämtliche Räder des Zielfahrzeugs, bei denen dies, insbesondere in Abhängigkeit von den Erfassungsbereichen des als Radarsensor ausgebildeten ersten Umgebungssensors und des zweiten Umgebungssensors, an sich möglich ist, identifiziert. Dabei werden dann für jedes identifizierte Rad entsprechend jeweils erste Raderfassungsdaten und zweite Raderfassungsdaten ermittelt bzw. bereitgestellt.

Bei dem zweidimensionalen Fenster kann es sich insbesondere um ein dem Fachmann aus der Radartechnik bekanntes sogenanntes Sliding Window handeln, welches zeitlich nacheinander die Radarreflexionspunkte durchläuft bzw. um jeden Radarreflexionspunkte gelegt wird.

In einer vorteilhaften Ausführungsform umfasst das Ableiten der Radarreflexionspunkte aus den Radarsensordaten folgende Schritte:
- Ermitteln von Radarreflexionspunkten mittels Fouriertransformation aus den Radarsensordaten,
- Trennen der Radarreflexionspunkte vom Rauschen der Radarsensordaten anhand eines CFAR-Filters, und
- Identifizieren der Radarreflexionspunkte, die von dem Zielfahrzeug reflektiert werden, durch ein Clusterverfahren, vorzugsweise ein DBSCAN-Verfahren.

Dabei wird mittels der Fouriertransformation vorteilhafterweise ein dreidimensionales Fourierspektrum von Radarreflexionspunkten mit Entfernung, Azimutwinkel und Dopplergeschwindigkeit gebildet. Das Trennen der Radarreflexionspunkte vom Rauschen der Radarsensordaten anhand eines CFAR-Filters (Constant false alarm rate-Filter) dient dazu, die von einem Objekt und insbesondere von dem Zielfahrzeug reflektierten Radarreflexionspunkte zu identifizieren bzw. von dem in den Radarsensordaten enthaltenen Signalrauschen zu unterscheiden. Das Identifizieren der Radarreflexionspunkte, die von dem Zielfahrzeug reflektiert werden, durch ein Clusterverfahren, basiert darauf, dass die einzelnen Radarreflexionspunkte als einheitliches Ganzes betrachtet werden, welches das Zielfahrzeug darstellt. Als Clusterverfahren wird vorzugsweise ein als DBSCAN (Density-Based Spatial Clustering of Applications with Noise) ausgebildeter Clustering-Algorithmus verwendet. Der DBSCAN ist eine räumliche Clusteranalyse, die auf einem dichtebasierten Algorithmus basiert, anhand dessen ein oder mehrere Cluster erkannt werden können.

In einer weiteren vorteilhaften Ausführungsform umfasst die Ermittlung der Summe der Varianzen der Dopplergeschwindigkeiten aller in einem Fenster enthaltenen Radarreflexionspunkte folgende Schritte:
- Ermitteln eines arithmetischen Mittelwerts aus den Dopplergeschwindigkeiten aller in dem Fenster enthaltenen Radarreflexionspunkte,
- Ermitteln einer Varianz der Dopplergeschwindigkeit eines Radarreflexionspunkt als Differenz zwischen der Dopplergeschwindigkeit des Radarreflexionspunkts und dem Mittelwert jeweils für alle in dem Fenster enthaltenen Radarreflexionspunkte, und
- Bilden der Summe der ermittelten Varianzen der Dopplergeschwindigkeiten aller in dem Fenster enthaltenen Radarreflexionspunkte.

Auf diese Weise kann die Summe der Varianzen der Dopplergeschwindigkeiten aller in einem Fenster enthaltenen Radarreflexionspunkte besonders genau und zuverlässig ermittelt werden.

In einer weiteren vorteilhaften Ausführungsform umfasst das Identifizieren eines Rads des Zielfahrzeugs aus den Radarreflexionspunkten weiter folgende Schritte:
- Zuordnen der als ein Punkt eines Rads bestimmten Radarreflexionspunkte zu einem Rad-Cluster durch ein Clusterverfahren, vorzugsweise ein DBSCAN-Verfahren, und
- Bestimmen des Rad-Clusters als ein Rad des Zielfahrzeugs.

Bei einem beispielsweise zweispurigen, zweiachsigen Fahrzeug als Zielfahrzeug können somit, insbesondere abhängig vom Erfassungsbereich des Radarsensors, maximal vier Rad-Cluster erzeugt werden.

In einer weiteren vorteilhaften Ausführungsform umfasst das Bereitstellen von ersten Raderfassungsdaten folgende Schritte:
- Berechnen der Positionsdaten eines Radschwerpunkts basierend auf den einem Rad-Cluster zugeordneten Radarreflexionspunkten, und
- Bereitstellen der Positionsdaten des Radschwerpunkts als erste Raderfassungsdaten.

Der Radschwerpunkt bzw. die Positionsdaten des Radschwerpunkts stellen dabei die Position des Rads dar. Die Positionsdaten werden insbesondere durch einen x-Wert und einen y-Wert in einem Referenzkoordinatensystem des Kraftfahrzeugs dargestellt. Vorzugsweise werden die Positionsdaten dabei durch eine Mittelwertbildung der entsprechenden x-Werte und y-Werte, der dem (gemeinsamen) Rad-Cluster zugeordneten Radarreflexionspunkten ermittelt.

In einer weiteren vorteilhaften Ausführungsform umfasst das Bereitstellen von ersten Raderfassungsdaten weiter folgende Schritte:
- Bestimmen eines Azimutwinkelwerts des dem Radschwerpunkt positionell nahegelegensten Radarreflexionspunktes,
- Zusammenfassen der Radarreflexionspunkte, die als Azimutwinkelwert den bestimmten Azimutwinkelwert aufweisen, in eine Gruppe,
- Ermitteln desjenigen Radarreflexionspunktes der Gruppe, der innerhalb der Gruppe einen relativ höchsten Intensitätswert aufweist und der zugleich nicht als ein Punkt eines Rads bestimmt wurde,
- Bereitstellen der Dopplergeschwindigkeit des ermittelten Radarreflexionspunktes als Geschwindigkeit des Zielfahrzeugs an der Position des Radschwerpunkts als erste Raderfassungsdaten.

Auf diese Weise lässt sich verhältnismäßig genau die Geschwindigkeit des Zielfahrzeugs an der Position des Radschwerpunkts ermitteln und bereitstellen. Da es an der Karosserie des Zielfahrzeugs viele Punkte mit einem im Vergleich zu den Rädern höherem Reflexionsvermögen gibt, wird hier also quasi eine Suche nach der gemessenen maximalen Intensität unter all den Radarreflexionspunkten durchgeführt, die denselben oder annähernd denselben Azimutwinkel wie das betrachtete Rad bzw. der betrachtete Radschwerpunkt aufweisen und die zugleich nicht als ein Punkt eines Rads bestimmt wurden. Dadurch wird möglichst gewährleistet, dass der derart ermittelte Radarreflexionspunkt auch tatsächlich nicht einem Punkt an dem Rad, sondern insbesondere einem Punkt an der Karosserie des Zielfahrzeugs entspricht.

Auf Grundlage der derart ermittelten und bereitgestellten Dopplergeschwindigkeit als Geschwindigkeit des Zielfahrzeugs an der Position des Radschwerpunkts kann vorteilhafterweise zudem eine Drehrate des Zielfahrzeugs ermittelt werden.

In einer weiteren vorteilhaften Ausführungsform umfasst das Zusammenführen der ersten Raderfassungsdaten und der zweiten Raderfassungsdaten folgende Schritte:
- Zuordnen der ersten Raderfassungsdaten und der zweiten Raderfassungsdaten jeweils einer Zielfahrzeugachse und einer Zielfahrzeugseite,
- Zusammenführen der einer gemeinsamen Zielfahrzeugachse und Zielfahrzeugseite zugeordneten ersten Raderfassungsdaten und zweiten Raderfassungsdaten basierend auf einem Covariance-Intersection-Algorithmus.

Die Verwendung eines Covariance Intersection-Algorithmus im Schritt des Zusammenführens der einer gemeinsamen Zielfahrzeugachse und Zielfahrzeugseite zugeordneten ersten und zweiten Raderfassungsdaten sorgt für eine konvergente Fusion der ersten Raderfassungsdaten mit den zweiten Raderfassungsdaten.

Für das Zuordnen der ersten Raderfassungsdaten und der zweiten Raderfassungsdaten werden vorteilhafterweise Radgates erzeugt, welchen die ersten Raderfassungsdaten und die zweiten Raderfassungsdaten jeweils insbesondere basierend auf Positionsdaten der ersten Raderfassungsdaten und der zweiten Raderfassungsdaten zugeordnet werden. Für ein zweispuriges, zweiachsiges Fahrzeug als Zielfahrzeug werden dabei also vier Radgates erzeugt, nämlich jeweils ein Radgate Vorne-Rechts, Vorne-Links, Hinten-Rechts und Hinten-Links, wobei die ersten Raderfassungsdaten und die zweiten Raderfassungsdaten jeweils dem entsprechenden Radgate zugeordnet werden.

Vorteilhafterweise werden dann im Schritt des Zusammenführens der ersten Raderfassungsdaten und zweiten Raderfassungsdaten diejenigen ersten Raderfassungsdaten und zweiten Raderfassungsdaten zusammengeführt, die jeweils in einem gemeinsamen Radgate enthalten sind.

Die Radgates werden zweckmäßigerweise geometrisch modellbasiert erzeugt und dabei aus einer vorgegebenen Geometrie des Zielfahrzeugs abgeleitet und anhand der Zielfahrzeugdimension skaliert. Alternativ oder zusätzlich können die Radgates dynamisch erzeugt werden basierend auf den ersten Raderfassungsdaten und/oder den zweiten Raderfassungsdaten, wobei die Dimensionierung der Radgates anhand eines vorgegebenen Raddurchmessers festgelegt wird.

In einer weiteren vorteilhaften Ausführungsform wird der Parameter des Zielfahrzeugs einem Verfolgungsfilter zum Verfolgen des Zielfahrzeugs zugeführt.

Dabei wird ein einer weiteren vorteilhaften Ausführungsform der Parameter des Zielfahrzeugs einem Unscented Kalman Filter als Verfolgungsfilter zugeführt, mittels welchem die aktuelle Position des Zielfahrzeugs anhand des Parameters geschätzt wird. Es handelt sich hierbei um eine nichtlineare Kalman-Filtervariante, die auf modellbasierter Prädiktion mit anschließender Korrektion anhand verfügbarer Messdaten basiert.

In einer weiteren vorteilhaften Ausführungsform wird dabei der Parameter des Zielfahrzeugs mehreren verschiedenen Unscented Kalman-Filtern als Verfolgungsfilter zugeführt wird, wobei die mehreren verschiedenen Unscented Kalman-Filter jeweils auf einem unterschiedlichen Bewegungsmodell basieren. Es ist hierbei vorgesehen, dass die mehreren verschiedenen Unscented Kalman-Filter miteinander kombiniert und insbesondere jeweils mit einer Gewichtung versehen werden. Hierfür kann vorzugsweise das dem Fachmann bekannte IMM-Verfahren (Interacting-Multiple-Model-Verfahren) verwendet werden. Das IMM-Verfahren definiert eine Interaktion mehrerer Unscented Kalman-Filter, welche parallel dieselben Messdaten verarbeiten.

Durch das Vorsehen und die Kombination von solchen mehreren verschiedenen Unscented Kalman-Filtern als Verfolgungsfilter, welche jeweils auf einem unterschiedlichen Bewegungsmodel basieren, kann in vorteilhafter Weise auf unterschiedliche mögliche Situationen eingegangen und diese entsprechend berücksichtigt werden, sodass hier in vorteilhafter Weise eine flexible Anpassung an eine konkrete Situation bewirkt werden kann.

Als Unscented Kalman-Filter werden dabei vorteilhafterweise Unscented Kalman-Filter verwendet, die auf einem der folgenden vier Bewegungsmodelle basieren:
- Constant Velocity Motion Model
- Constant Acceleration Motion Model
- Constant Steering Angle and Velocity Model
- Bewegungsmodell mit expliziter Schwimmwinkelschätzung und nicht linearen Einspurmodell.

Insbesondere werden zumindest vier Unscented Kalman-Filter verwendet, wobei jeder der vier Unscented Kalmann-Filter auf einem bestimmten Bewegungsmodell der vorstehend genannten Bewegungsmodelle basiert, so dass alle vier vorstehend genannten Bewegungsmodelle abgebildet sind.

In einer weiteren vorteilhaften Ausführungsform ist der Parameter des Zielfahrzeugs ein geometrischer Schwerpunkt des Zielfahrzeugs. Mittels eines solchen geometrischen Schwerpunkts kann das Zielfahrzeug in seiner Position und/oder seinem Kurs, insbesondere im Nahbereich um das Kraftfahrzeug, gut charakterisiert und verfolgt werden. Beispielsweise im Vergleich zu einem Radarreflexionspunkt der Oberfläche bzw. Karosserie des Zielfahrzeugs, welcher während eines Fahrmanövers "wandert", ist der geometrische Schwerpunkt deterministisch. Auch für den Fall, dass sich das Zielfahrzeug nicht mehr vollständig im Erfassungsbereich der Umgebungssensoren befindet, sich insbesondere zumindest teilweise in einem sogenannten Blind Spot befindet, ist eine genaue Verfolgung des Zielfahrzeugs basierend auf seinem geometrischen Schwerpunkt weiterhin möglich.

Dabei wird der geometrische Schwerpunkt ermittelt aus den fusionierten ersten und zweiten Raderfassungsdaten und somit vorteilhafterweise aus den fusionierten Positionsdaten zumindest eines Rads bzw. Radschwerpunkts, insbesondere aus den fusionierten Positionsdaten aller identifizierter Räder. Der geometrische Schwerpunkt kann aber auch aus den fusionierten Positionsdaten und den Geschwindigkeitsdaten des Zielfahrzeugs an der Position des Radschwerpunkts zumindest eines Rads, insbesondere aus den fusionierten Positionsdaten und den Geschwindigkeitsdaten des Zielfahrzeugs an den entsprechenden Positionen der Radschwerpunkte aller identifizierter Räder ermittelt werden. Der geometrische Schwerpunkt kann dabei aus den entsprechenden Daten beispielsweise modellbasiert berechnet oder geschätzt werden.

Vorteilhafterweise werden aus den entsprechenden Daten eines oder mehrerer Räder neben dem Schwerpunkt des Zielfahrzeugs insbesondere eine Gierrate und/oder eine Geschwindigkeit des Zielfahrzeugs, vorzugsweise eine Relativgeschwindigkeit zwischen dem Kraftfahrzeug und dem Zielfahrzeug, als weitere Parameter des Zielfahrzeugs ermittelt. Dabei wird die Gierrate vorteilhafterweise basierend auf der Geschwindigkeit des Zielfahrzeugs an der Position des Radschwerpunkts zumindest eines Rads, insbesondere basierend auf den Geschwindigkeiten des Zielfahrzeugs an den entsprechenden Positionen der Radschwerpunkte aller identifizierter Räder, ermittelt. Die Kenntnis dieser Parameter erhöht weiter die Genauigkeit der Verfolgung des Zielfahrzeugs und basierend darauf die Genauigkeit der Ermittlung und/oder Festlegung von kollisionsrelevanten Daten.

Der zweite Umgebungssensor kann beispielsweise als Kamera oder als ein (weiterer) Radarsensor ausgebildet sein. Für die Verwendung des (weiteren) Radarsensors als zweiten Umgebungssensors gelten die für den als Radarsensor ausgebildeten ersten Umgebungssensor erläuterten Ausführungen entsprechend.

In einer weiteren vorteilhaften Ausführungsform ist der zweite Umgebungssensor aber als Lidarsensor ausgebildet, wobei die Sensordaten Lidarreflexionspunkte umfassen. Mittels Lidarsensor werden entfernte Objekte wie beispielsweise das entfernte Zielfahrzeug, welches verfolgt werden soll, typischerweise mittels Laser oder einer anderen Lichtquelle angestrahlt und dadurch erzeugte Lidarreflexionspunkte werden aufgenommen.

Dabei können zunächst Lidarreflexionspunkte des Zielfahrzeugs aus einer aufgenommenen Menge von Lidarreflexionspunkten ausgewählt werden, also diejenigen Lidarreflexionspunkte identifiziert werden, welche dem entfernten Zielfahrzeug zugeordnet sind bzw. von diesem stammen.

In einer vorteilhaften Ausführungsform umfasst das Identifizieren eines Rads des Zielfahrzeugs aus den Sensordaten des Lidarsensors ein Auswählen von Lidarreflexionspunkten des Zielfahrzeugs mit einer vorgegebenen maximalen Höhe über Grund, wobei ein Rad nur basierend auf den ausgewählten Lidarreflexionspunkten identifiziert wird. Ein Rad ist die einzige Komponente eines Fahrzeugs, welches den Grund berührt, so dass Lidarreflexionspunkte des Zielfahrzeugs, welche eine vorgegebene maximale Höhe über Grund haben überhaupt nur von einem Rad stammen können. Dadurch ist ein genaues und zuverlässiges Identifizieren eines Rads ermöglicht. Zudem kann die weitere Verarbeitung erheblich vereinfacht werden, da nur eine recht begrenzte Menge an Lidarreflexionspunkten weiterverarbeitet werden muss.

In einer weiteren vorteilhaften Ausführungsform umfasst das Bereitstellen von zweiten Raderfassungsdaten folgende Schritte:
- Identifizieren von ausgewählten Lidarreflexionspunkten, welche innerhalb eines vorgegebenen Abstands mindestens eine vorgegebene Anzahl von Nachbar-Lidarreflexionspunkten haben, als Kernpunkte,
- Identifizieren von ausgewählten Lidarreflexionspunkten, welche zu mindestens einem Kernpunkt höchstens den vorgegebenen Abstand haben, jedoch innerhalb des vorgegebenen Abstands weniger als die vorgegebene Anzahl von Nachbar-Lidarreflexionspunkten haben, als Randpunkte,
- Erkennen eines jeweiligen Segments als von Randpunkten umgebener Bereich von Kernpunkten, wobei jedes Segments einer Reifenlauffläche oder einer Reifenseitenwand zugeordnet ist,
- Anfitten einer jeweiligen Strecke durch jedes Segment,
- Ermitteln eines jeweiligen Lots auf jede der Strecken mittig in der jeweiligen Strecke,
- Ermitteln eines Radmittelpunkts als Schnittpunkt dieser Lote, und
- Bereitstellen der Positionsdaten des Radmittelpunkts als zweite Raderfassungsdaten.

Eine solche Vorgehensweise der Klassifizierung von Kernpunkten und Randpunkten und ein basierend darauf erfolgendes Erkennen von Segmenten hat sich für typische Anwendungsfälle als zuverlässige und schnelle Möglichkeit des Erkennens von Segmenten erwiesen. Es sei dabei verstanden, dass Lidarreflexionspunkte, welche keine der Kriterien für Kernpunkte bzw. Randpunkte erfüllen, als Rauschpunkte bezeichnet werden können. Bei einer Reifenlauffläche und einer Reifenseitenwand handelt es sich um typische Merkmale eines Rads, welche eine erhebliche Anzahl an Lidarreflexionspunkten verursachen und dementsprechend zu zahlreichen erkannten Lidarreflexionspunkten führen. Das Ermitteln des Radmittelpunkts basiert auf der Annahme, dass sich ein Radmittelpunkt typischerweise an einem Schnittpunkt der erwähnten Lote befindet. Er kann sich insbesondere auch über einem solchen Schnittpunkt befinden. Die Positionsdaten werden insbesondere durch einen x-Wert und einen y-Wert in einem Referenzkoordinatensystem des Kraftfahrzeugs dargestellt.

Vorteilhafterweise wird an einem Rad des Zielfahrzeugs, an welchem nicht sowohl eine Strecke einer Reifenlauffläche wie auch eine Strecke einer Reifenseitenwand angefittet wurde, der entsprechende Radmittelpunkt basierend auf einem Radmodell und/oder anderen Informationen ermittelt. Beispielsweise kann angenommen werden, dass die typischerweise vier Räder eines Zielfahrzeugs gleich ausgebildet sind. Somit kann beispielsweise aus Abständen, welche bei einem Rad erkannt wurden, auf Abstände bzw. den Radmittelpunkt bei einem anderen Rad geschlossen werden, bei welchem nicht genügend Lidarreflexionspunkte zur separaten Ermittlung des Radmittelpunkts aufgenommen wurden. Dies kann beispielsweise vorkommen, wenn das entsprechende Rad von einem anderen Rad oder anderen Gegenständen verdeckt ist.

In einer weiteren vorteilhaften Ausführungsform umfasst das Bereitstellen von zweiten Raderfassungsdaten ferner folgende Schritte:
- Ermitteln eines Radlenkwinkels des Zielfahrzeugs basierend auf den angefitteten Strecken, und
- Bereitstellen des Radlenkwinkels als zweite Raderfassungstaten.

Sowohl die Reifenlauffläche wie auch die Reifenseitenwand hängen typischerweise unmittelbar vom Radlenkwinkel ab. Es wurde erkannt, dass dieser Zusammenhang vorteilhaft dazu verwendet werden kann, den Radlenkwinkel, d.h. beispielsweise einen Winkel gelenkter Räder relativ zu sonstigen Elementen einer Karosserie oder einer Längsachse des entfernten Zielfahrzeugs, zu ermitteln. Die Kenntnis des Radlenkwinkels des Zielfahrzeug erhöht weiter die Genauigkeit der Verfolgung des Zielfahrzeugs und basierend darauf die Genauigkeit der Ermittlung von kollisionsrelevanten Daten, da daraus insbesondere der momentan vom Fahrer des Zielfahrzeugs oder einer autonomen Fahrzeugsteuerung gewünschte Kurs des Zielfahrzeugs ableitbar ist.

In einer weiteren vorteilhaften Ausführungsform weist das Verfahren ferner den Schritt eines Ermittelns von kollisionsrelevanten Daten basierend auf der Verfolgung des Zielfahrzeugs anhand des Parameters auf. Unter dem Ermitteln kann dabei insbesondere auch das Festlegen von einem vorteilhafterweise als zweite Raderfassungsdaten bereitgestellten Radlenkwinkel und/oder eines ermittelten Parameters, wie vorteilhafterweise Gierrate und/oder Geschwindigkeit, des Zielfahrzeugs als kollisionsrelevante Daten umfasst sein. Derartige kollisionsrelevante Daten können, insbesondere in einer Pre-Crash-Phase, insbesondere zur gezielten Aktivierung von passiven Sicherheitssystemen wie beispielsweise dem Spannen eines Sicherheitsgurts oder dem Auslösen eines Airbags verwendet werden. Auch kann in eine Steuerung des das Verfahren ausführenden Kraftfahrzeugs eingegriffen werden, um beispielsweise ein Ausweichmanöver zu fahren oder dafür zu sorgen, dass die Kollision an einer weniger kritischen Stelle des Kraftfahrzeugs erfolgt.

Ferner umfasst die vorliegende Erfindung eine Kollisionserkennungsvorrichtung für ein Kraftfahrzeug zur Erkennung einer bevorstehenden Kollision mit einem entfernten Zielfahrzeug mit einem als Radarsensor ausgebildeten ersten Umgebungssensor und einem zweiten Umgebungssensor sowie einem Steuergerät. Dabei ist das Steuergerät hergerichtet, um das Verfolgen des entfernten Zielfahrzeugs in einem Umgebungsbereich des Kraftfahrzeugs anhand des erfindungsgemäßen Verfahrens durchzuführen.

Die für das erfindungsgemäße Verfahren beschriebenen Vorteile und bevorzugten Ausführungsformen gelten entsprechend auch für die erfindungsgemäße Kollisionserkennungsvorrichtung.

Ausführungsbeispiele der Erfindung werden im Folgenden anhand einer Zeichnung näher erläutert. Darin zeigen:
- Fig. 1: in einer schematischen Darstellung ein Kraftfahrzeug zur Ausführung des erfindungsgemäßen Verfahrens zusammen mit einem entfernten Zielfahrzeug,
- Fig. 2: ein Ablaufdiagramm eines Verfahrens zum Verfolgen des entfernten Zielfahrzeugs in einem Umgebungsbereich des Kraftfahrzeugs gemäß Fig. 1,
- Fig. 3: in einer schematischen Darstellung das Bereitstellen von zweiten Raderfassungsdaten des Zielfahrzeug gemäß Fig. 1, und
- Fig. 4: ein Radgating des Zielfahrzeugs gemäß Fig. 1.

Einander entsprechende Teile sind in allen Figuren stets mit gleichen Bezugszeichen versehen.

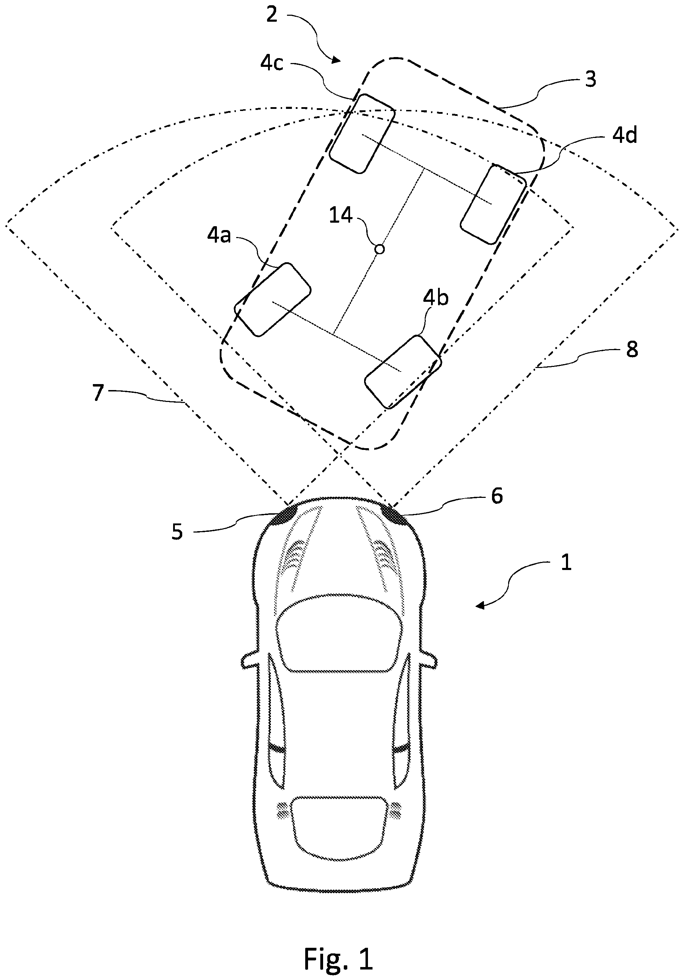

Fig. 1 zeigt schematisch ein Kraftfahrzeug 1 und ein entferntes Zielfahrzeug 2. Das Zielfahrzeug 2 umfasst eine Karosserie 3 und vier Räder 4a, 4b, 4c, 4d. In der in Fig. 1 gezeigten Darstellung bewegen sich das Kraftfahrzeug 1 und das entfernte Zielfahrzeug 2 derart aufeinander zu, dass eine im Wesentlichen frontale Kollision bevorsteht.

Das Kraftfahrzeug 1 weist eine Kollisionserkennungsvorrichtung zur Erkennung einer bevorstehenden Kollision mit dem entfernten Zielfahrzeug 2 auf. Dabei umfasst die Kollisionserkennungsvorrichtung einen als Radarsensor ausgebildeten ersten Umgebungssensor 5 und einen als Lidarsensor ausgebildeten zweiten Umgebungssensor 6 sowie ein Steuergerät, welches ein Verfahren 100 zum Verfolgen des entfernten Zielfahrzeugs 2 ausführt. Der Radarsensor 5 wird dabei in einem Fast-Mode verwendet, bei dem die Datenakquisitionszeit durch Reduzierung der Anzahl von Chirps pro Frame reduziert ist, um optimale Zykluszeiten zu erhalten. Der Radarsensor 5 und der Lidarsensor 6 kommunizieren typischerweise mit dem Steuergerät und stellen ihre jeweiligen Daten dem Steuergerät über einen Kraftfahrzeugs-Bus zur Verfügung, wobei diese Kommunikation auch drahtlos sein könnte.

Der Radarsensor 5 und der Lidarsensor 6 sind in eine vorwärtige Richtung orientiert und auf eine vorwärtige Umgebungs- und Zielfahrzeugerfassung ausgerichtet. Dabei überlappen sich der Erfassungsbereich 7 des Radarsensors 5 und der Erfassungsbereich 8 des Lidarsensors 6 derart, dass wenigstens ein Teilbereich des Zielfahrzeugs 2 durch beide Umgebungssensoren 5, 6 erfasst wird. Das Verfahren kann aber auch für eine seitwärts und/oder rückwärts gerichtete Ausrichtung entsprechend angewendet werden.

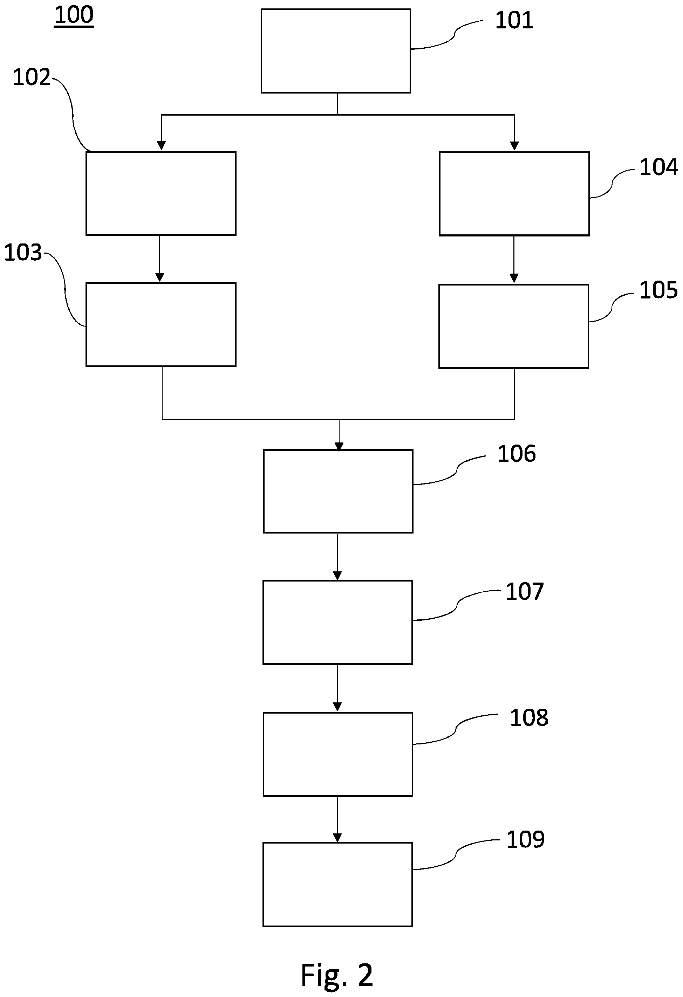

Fig. 2 zeigt ein Ablaufdiagramm eines Verfahrens 100 zum Verfolgen eines entfernten Zielfahrzeugs 2 in einem Umgebungsbereich eines Kraftfahrzeugs 1 gemäß Fig. 1. Die Vorgehensweise wird nachfolgend also mit Bezug auf die Situation beschrieben, dass eine Kollision bevorsteht.

In einem Schritt 101 werden zunächst Radarsensordaten des Radarsensors 5 sowie Lidarreflexionspunkte 9 umfassende Sensordaten des Lidarsensors 6 bereitgestellt. Dabei werden aus den Radarsensordaten Radarreflexionspunkte abgeleitet, welche eine durch eine Entfernung und einen Azimutwinkel festgelegte Position und eine Dopplergeschwindigkeit von Punkten an dem Zielfahrzeug 2 bestimmen. Hierzu wird basierend auf den Radarsensordaten mittels einer Fouriertransformation zunächst ein dreidimensionales Fourierspektrum von Radarreflexionspunkten mit Entfernung, Azimutwinkel und Dopplergeschwindigkeit gebildet. Anschließend erfolgt ein Trennen der Radarreflexionspunkte vom Rauschen der Radarsensordaten anhand eines CFAR-Filters, um die von dem Zielfahrzeug 2 reflektierten Radarreflexionspunkte zu identifizieren bzw. von dem in den Radarsensordaten enthaltenen Signalrauschen zu unterscheiden. Durch ein als DBSCAN-Verfahren ausgebildetes Clusterverfahren werden dann diejenigen Radarreflexionspunkte identifiziert, die von dem Zielfahrzeug 2 reflektiert werden.

Zudem werden Lidarreflexionspunkte 9 des Zielfahrzeugs 2 aus einer aufgenommenen Menge von Lidarreflexionspunkten 9 ausgewählt, also diejenigen Lidarreflexionspunkte 9 identifiziert, welche dem entfernten Zielfahrzeug 2 zugeordnet sind bzw. von diesem stammen.

In einem Schritt 102 werden dann ein oder mehrere Räder 4a, 4b, 4c, 4d des Zielfahrzeugs 2 aus den Radarreflexionspunkten identifiziert. Hierbei wird die besondere Bewegungscharakteristik eines (rotierenden) Rads 4a, 4b, 4c, 4d des Zielfahrzeugs 2 genutzt sowie die Tatsache, dass die Bewegung eines Rads 4a, 4b, 4c, 4d von der Bewegung der Karosserie 3 des Zielfahrzeugs 2 abweicht bzw. zusätzlich zur Bewegung der Karosserie 3 des Zielfahrzeugs 2 rotiert und dies basierend auf den Mikro-Doppler-Effekt eine auswertbare Dopplermodulationen um die hauptsächliche Dopplerverschiebung erzeugt. Beispielsweise bewegt sich ein Radzentrumspunkt mit der gleichen Geschwindigkeit wie die Karosserie 3 des Zielfahrzeugs 2. Ein mittig am Außenradius des Rads 4a, 4b, 4c, 4d oben liegender Punkt bewegt sich aufgrund der Rotation des Rads 4a, 4b, 4c, 4d mit ungefähr der zweifachen Geschwindigkeit der Karosserie 3 des Zielfahrzeugs 2. Dagegen ist die Geschwindigkeit eines mittig am Außenradius des Rads 4a, 4b, 4c, 4d unten liegenden Punkts aufgrund der Rotation des Rads 4a, 4b, 4c, 4d Null oder etwas größer als Null.

Die verschiedenen Geschwindigkeiten der Punkte eines Rads 4a, 4b, 4c, 4d ergeben somit unterschiedliche Dopplergeschwindigkeiten der entsprechenden Radarreflexionspunkte, welche zum Teil erheblich voneinander abweichen und welche (insbesondere abgesehen von der Dopplergeschwindigkeit der dem Radzentrumspunkt entsprechenden Radarreflexionspunkten) zudem auch von der Dopplergeschwindigkeit der Radarreflexionspunkte der Karosserie 3 abweichen. Diese Varianz der Dopplergeschwindigkeiten der Radarreflexionspunkte wird im Rahmen der Identifizierung eines oder mehrere Räder 4a, 4b, 4c, 4d des Zielfahrzeugs 2 genutzt.

Hierzu wird um jeden Radarreflexionspunkt jeweils ein einheitlich großes zweidimensionales Fenster mit einer Erstreckung in der Entfernungsdimension und der Azimutwinkeldimension gelegt und es wird eine Summe der Varianzen der Dopplergeschwindigkeiten aller in dem Fenster enthaltenen Radarreflexionspunkte ermittelt. Hierfür wird zunächst ein arithmetischer Mittelwert aus den Dopplergeschwindigkeiten aller in dem Fenster enthaltenen Radarreflexionspunkte ermittelt. Dann wird die Varianz der Dopplergeschwindigkeit eines Radarreflexionspunkt als Differenz zwischen der Dopplergeschwindigkeit des Radarreflexionspunkts und dem Mittelwert jeweils für alle in dem Fenster enthaltenen Radarreflexionspunkte berechnet. Anschließend wird Summe der ermittelten Varianzen der Dopplergeschwindigkeiten aller in dem Fenster enthaltenen Radarreflexionspunkte berechnet und dem entsprechenden Radarreflexionspunkt zugeordnet. Ein Radarreflexionspunkt, dessen zugeordnete Summe größer als ein vorgegebener Schwellwert ist, wird als ein Punkt eines Rads 4a, 4b, 4c, 4d bestimmt.

Anschließend werden die als ein Punkt eines Rads 4a, 4b, 4c, 4d des Zielfahrzeugs 2 bestimmten Radarreflexionspunkte durch Anwenden eines als DBSCAN-Verfahren ausgebildeten Clusterverfahrens einem Rad-Cluster zugeordnet und das Rad-Cluster als ein Rad 4a, 4b, 4c, 4d des Zielfahrzeugs 2 bestimmt.

Auf diese Weise können ein oder mehrere Räder 4a, 4b, 4c, 4d des Zielfahrzeugs äußerst zuverlässig identifiziert werden.

In einem Schritt 103 werden anschließend erste Raderfassungsdaten basierend auf einem oder mehreren aus den Radarreflexionspunkten identifizierten Rädern 4a, 4b, 4c, 4d bereitgestellt. Dazu werden für jedes identifizierte Rad 4a, 4b, 4c, 4d die Positionsdaten eines jeweiligen Radschwerpunkts sowie die jeweiligen Geschwindigkeitsdaten des Zielfahrzeugs an den Positionen der entsprechenden Radschwerpunkte basierend auf den einem entsprechenden Rad-Cluster zugeordneten Radarreflexionspunkten ermittelt und als erste Raderfassungsdaten für das jeweilige Rad 4a, 4b, 4c, 4d bereitgestellt.

Der Radschwerpunkt bzw. die Positionsdaten des Radschwerpunkts stellen dabei die Position des entsprechenden Rads 4a, 4b, 4c, 4d dar. Die Positionsdaten werden dabei jeweils durch einen x-Wert und einen y-Wert in einem Referenzkoordinatensystem des Kraftfahrzeugs 1 dargestellt und durch eine Mittelwertbildung der entsprechenden x-Werte und y-Werte, der dem entsprechenden Rad-Cluster zugeordneten Radarreflexionspunkten ermittelt.

Zur Ermittlung der Geschwindigkeitsdaten des Zielfahrzeugs an den Positionen der entsprechenden Radschwerpunkte wird für jedes identifizierte Rad 4a, 4b, 4c, 4d jeweils zunächst ein Azimutwinkelwert des dem Radschwerpunkt positionell nahegelegensten Radarreflexionspunktes bestimmt. Dann werden die Radarreflexionspunkte, die als Azimutwinkelwert den bestimmten Azimutwinkelwert aufweisen, in eine Gruppe zusammengefasst. Es wird derjenige Radarreflexionspunkt der Gruppe ermittelt, der innerhalb der Gruppe einen relativ höchsten Intensitätswert aufweist und der zugleich nicht als ein Punkt des entsprechenden Rads 4a, 4b, 4c, 4d bestimmt wurde. Die Dopplergeschwindigkeit des derart ermittelten Radarreflexionspunktes wird als Geschwindigkeit des Zielfahrzeugs 2 an der Position des entsprechenden Radschwerpunkts als (weitere) erste Raderfassungsdaten bereitgestellt.

In einem Schritt 104, welcher parallel zu Schritt 102 ablaufen kann, werden ein oder mehrere Räder 4a, 4b, 4c, 4d des Zielfahrzeugs 2 aus den Lidarreflexionspunkten 9 des Lidarsensors 6 identifiziert. Dazu werden nur die ersten Lidarreflexionspunkte 9 des Zielfahrzeugs 2, welche sich über dem Grund befinden bzw. sich nur maximal einen vorgegebenen Abstand über dem Grund befinden, den Rädern 4a, 4b, 4c, 4d zugeordnet. Die Räder 4a, 4b, 4c, 4d sind die einzige Komponente eines Zielfahrzeugs 2, welche den Grund berühren, so dass Lidarreflexionspunkte 9 des Zielfahrzeugs 2, welche eine vorgegebene maximale Höhe über Grund haben, überhaupt nur von einem Rad 4a, 4b, 4c, 4d stammen können. Dadurch ist ein genaues und zuverlässiges Identifizieren eines oder mehrerer Räder 4a, 4b, 4c, 4d ermöglicht. Zudem kann die weitere Verarbeitung erheblich vereinfacht werden, da nur eine recht begrenzte Menge an Lidarreflexionspunkten 9 weiterverarbeitet werden muss.

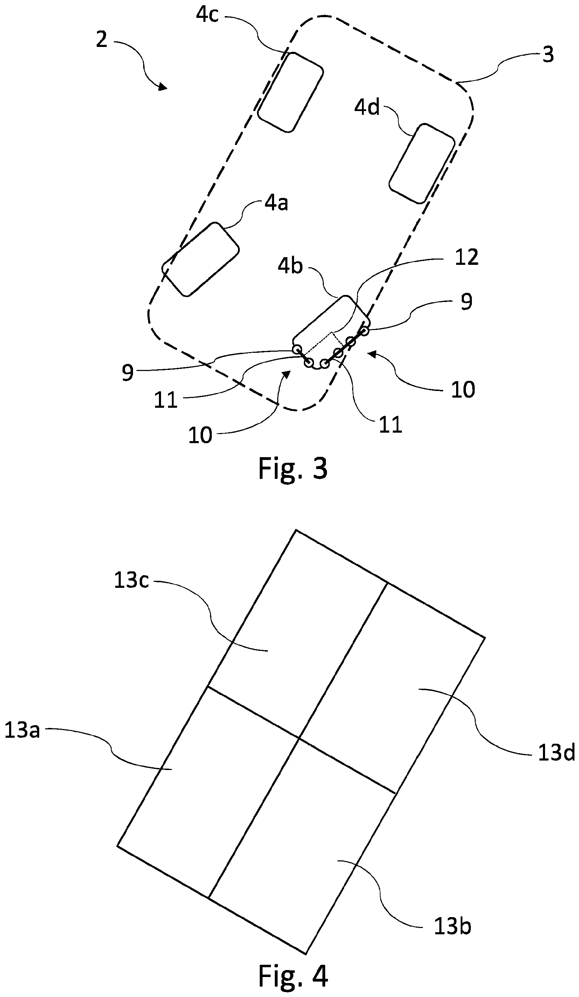

In einem Schritt 105 werden dann zweite Raderfassungsdaten basierend auf einem oder mehreren aus den Lidarreflexionspunkten 9 identifizierten Rädern 4a, 4b, 4c, 4d bereitgestellt. Dies ist in Fig. 3 anhand einer schematischen Darstellung des Zielfahrzeug 2 gemäß Fig. 1 beispielhaft für ein Rad 4b veranschaulicht.

An dem Rad 4b werden die entsprechenden Lidarreflexionspunkte 9 mit einem dichtebasierten Verfahren geclustert bzw. segmentiert. Dabei sind in Fig. 3 lediglich einzelne Lidarreflexionspunkte mit dem Bezugszeichen 9 versehen, um die Abbildung nicht zu überladen. Es können dabei beispielsweise dicht beieinander liegende Lidarreflexionspunkte 9 betrachtet werden, welche durch einen gewissen punktearmen Raum voneinander getrennt sind. Lidarreflexionspunkte 9, die innerhalb einer zuvor bestimmten Distanz bzw. eines vorgegebenen Abstands mindestens eine vorgegebene Anzahl weiterer Lidarreflexionspunkte 9 besitzen, sind dabei Kernpunkte. Kernpunkte, deren Abstand kleiner als der vorgegebene Abstand ist, gehören dabei typischerweise zum gleichen Cluster bzw. zum gleichen Segment 10. Lidarreflexionspunkte 9, welche dieses Kriterium nicht erfüllen, aber nahe an einem Cluster bzw. Segment 10 liegen, werden als Randpunkte klassifiziert. Lidarreflexionspunkte 9, welche beide Kriterien nicht erfüllen, gelten als Rauschpunkte. An dem Rad 4b sind somit zwei Segmente 10 vorhanden, wobei hier ein Segment 10 zwei Lidarreflexionspunkte 9 aufweist und ein weiteres Segment 10 vier Lidarreflexionspunkte 9 aufweist.

Es wird nun in die segmentierten Lidarreflexionspunkte 9 eine Linie bzw. Strecke 11 gefittet, welche Position und Winkel der Reifenlauffläche des Rads 4b darstellt, und eine weitere Strecke 11 gefittet, welche die Reifenseitenwand darstellt. Die Reifenlauffläche ist in Fig. 3 durch zwei Lidarreflexionspunkte 9 angegeben, wohingegen die Reifenseitenwand durch vier Lidarreflexionspunkte 9 angegeben ist.

Diese beiden Linien bzw. Strecken 11 stehen senkrecht zueinander. Mithilfe der Aufstellung eines Lots an den Linien 11 wird ein Schnittpunkt der Lote erstellt, der einen Radmittelpunkt 12 des Rads 4b wiedergibt. Die Positionsdaten des Radmittelpunkts 12 werden, insbesondere durch einen x-Wert und einen y-Wert in dem Referenzkoordinatensystem des Kraftfahrzeugs 1 dargestellt, als zweite Positionsdaten bereitgestellt. Zudem kann basierend auf den angefitteten Strecken 11 ein Radlenkwinkel ermittelt und als zweite Raderfassungsdaten bereitgestellt werden.

In einem Schritt 106 des Verfahrens 100 werden dann die ersten Raderfassungsdaten und die zweiten Raderfassungsdaten zusammengeführt. Dazu werden die ersten Raderfassungsdaten und die zweiten Raderfassungsdaten zunächst jeweils einer Zielfahrzeugachse und einer Zielfahrzeugseite zugeordnet.

Für dieses Zuordnen werden Radgates 13a, 13b, 13c, 13d erzeugt, welchen die ersten Raderfassungsdaten und die zweiten Raderfassungsdaten jeweils basierend auf den entsprechenden Positionsdaten der ersten Raderfassungsdaten und der zweiten Raderfassungsdaten zugeordnet werden.

Ein solches Radgating des Zielfahrzeugs 2 ist in Fig. 4 dargestellt. Für das Zielfahrzeug 2, welches ein zweispuriges, zweiachsiges Fahrzeug darstellt, werden folglich vier Radgates 13a, 13b, 13c, 13d geometrisch modellbasiert erzeugt und dabei aus einer vorgegebenen Geometrie des Zielfahrzeugs 2 abgeleitet und anhand der Zielfahrzeugdimension skaliert. Alternativ oder zusätzlich können die Radgates 13a, 13b, 13c, 13d dynamisch erzeugt werden basierend auf den ersten Raderfassungsdaten und/oder den zweiten Raderfassungsdaten, wobei die Dimensionierung der Radgates 13a, 13b, 13c, 13d anhand eines vorgegebenen Raddurchmessers festgelegt wird. Somit liegen jeweils ein Radgate Vorne-Rechts 13a, Vorne-Links 13b, Hinten-Rechts 13c und Hinten-Links 13d vor, wobei die ersten Raderfassungsdaten und die zweiten Raderfassungsdaten jeweils dem entsprechenden Radgate 13a, 13b, 13c, 13d zugeordnet werden.

Anschließend werden basierend auf einem Covariance-Intersection-Algorithmus diejenigen ersten Raderfassungsdaten und zweiten Raderfassungsdaten zusammengeführt, die jeweils in einem gemeinsamen Radgate 13a, 13b, 13c, 13d enthalten sind. Die Verwendung eines Covariance Intersection-Algorithmus im Schritt des Zusammenführens der einem gemeinsamen Radgate 13a, 13b, 13c, 13d zugeordneten ersten und zweiten Raderfassungsdaten sorgt für eine konvergente Fusion der ersten Raderfassungsdaten mit den zweiten Raderfassungsdaten.

In einem Schritt 107 des Verfahrens 100 wird dann basierend auf den zusammengeführten ersten und zweiten Raderfassungsdaten der geometrische Schwerpunkt 14 des Zielfahrzeugs 2 als ein Parameter des Zielfahrzeugs 2 ermittelt. Dabei wird der geometrische Schwerpunkt 14 insbesondere aus den fusionierten Positionsdaten aller identifizierter Räder 4a, 4b, 4c, 4d beispielsweise modellbasiert und/oder mittels einer sogenannten Motion State Transformation berechnet oder geschätzt. Mittels des geometrischen Schwerpunkts 14 kann das Zielfahrzeug 2 in seiner Position und/oder seinem Kurs, insbesondere im Nahbereich um das Kraftfahrzeug 1, gut charakterisiert und verfolgt werden. Beispielsweise im Vergleich zu einem bestimmten Radarreflexionspunkt der Karosserie 3 des Zielfahrzeugs 2, welcher während eines Fahrmanövers "wandert", ist der geometrische Schwerpunkt 14 deterministisch. Auch für den Fall, dass sich das Zielfahrzeug 2 nicht mehr vollständig im Erfassungsbereich der Umgebungssensoren 5, 6 befindet, sich insbesondere zumindest teilweise in einem sogenannten Blind Spot befindet, ist eine genaue Verfolgung des Zielfahrzeugs 2 basierend auf seinem geometrischen Schwerpunkt 14 weiterhin möglich.

Zudem werden aus den fusionierten Positionsdaten aller identifizierter Räder 4a, 4b, 4c, 4d und Geschwindigkeitsdaten an den entsprechenden Positionen der Radschwerpunkte aller identifizierter Räder 4a, 4b, 4c, 4d eine Gierrate und eine Geschwindigkeit des Zielfahrzeugs 2 als weitere Parameter des Zielfahrzeugs 2 ermittelt.

In einem Schritt 108 wird der geometrische Schwerpunkt 14 des Zielfahrzeugs 2 einem Verfolgungsfilter zum Verfolgen des Zielfahrzeugs 2 zugeführt, mittels welchem die aktuelle Position des Zielfahrzeugs 2 anhand des geometrischen Schwerpunkts 14 geschätzt wird. Dabei umfasst der Verfolgungsfilter vier verschiedene Unscented Kalman-Filter, welche jeweils auf einem unterschiedlichen Bewegungsmodell basieren. Es ist hierbei vorgesehen, dass die vier verschiedenen Unscented Kalman-Filter miteinander kombiniert und jeweils mit einer Gewichtung versehen sind. Hierfür wird das IMM-Verfahren (Interacting-Multiple-Model-Verfahren) verwendet, welches eine Interaktion der vier Unscented Kalman-Filter definiert, die parallel den geometrischen Schwerpunkt 14 des Zielfahrzeugs 2 verarbeiten. Die vier Unscented Kalman-Filter basieren auf den folgenden vier Bewegungsmodellen:
- Constant Velocity Motion Model
- Constant Acceleration Motion Model
- Constant Steering Angle and Velocity Model
- Bewegungsmodell mit expliziter Schwimmwinkelschätzung und nicht linearen Einspurmodell.

Durch das Vorsehen und die Kombination dieser vier verschiedenen Unscented Kalman-Filtern als Verfolgungsfilter, kann in vorteilhafter Weise auf unterschiedliche mögliche Situationen eingegangen und diese entsprechend berücksichtigt werden, sodass hier in vorteilhafter Weise eine flexible Anpassung an eine konkrete Situation bewirkt und damit eine möglichst genaue Verfolgung erreicht werden kann.

In einem Schritt 109 werden kollisionsrelevanten Daten, wie insbesondere eine Gierrate, eine Geschwindigkeit und ein Radlenkwinkel des Zielfahrzeugs 2, basierend auf der Verfolgung des Zielfahrzeugs 2 anhand des geometrischen Schwerpunkts 14 ermittelt. Als ein solches Ermitteln ist dabei insbesondere auch das Festlegen als kollisionsrelevante Daten von dem als zweite Raderfassungsdaten bereitgestellten Radlenkwinkel und der als Parameter ermittelten Gierrate und Geschwindigkeit des Zielfahrzeugs 2 zu verstehen. Derartige kollisionsrelevante Daten können, insbesondere in einer Pre-Crash-Phase, zur gezielten Aktivierung von passiven Sicherheitssystemen des Kraftfahrzeugs 1, wie beispielsweise dem Spannen eines Sicherheitsgurts oder dem Auslösen eines Airbags, verwendet werden. Auch kann in eine Steuerung des das Verfahren 100 ausführenden Kraftfahrzeugs 1 eingegriffen werden, um beispielsweise ein Ausweichmanöver zu fahren oder dafür zu sorgen, dass die Kollision an einer weniger kritischen Stelle des Kraftfahrzeugs 1 erfolgt.

### Bezugszeichenliste

- 1: Kraftfahrzeug
- 2: Zielfahrzeug
- 3: Karosserie
- 4a, 4b, 4c, 4d: Rad
- 5: erster Umgebungssensor (Radarsensor)
- 6: zweiter Umgebungssensor (Lidarsensor)
- 7: Erfassungsbereich Radarsensor
- 8: Erfassungsbereich Lidarsensor
- 9: Lidarreflexionspunkt
- 10: Segment
- 11: Strecke
- 12: Radmittelpunkt
- 13a: Radgate Vorne-Rechts
- 13b: Radgate Vorne-Links
- 13c: Radgate Hinten-Rechts
- 13d: Radgate Hinten-Links
- 14: geometrischer Schwerpunkt
- 100: Verfahren zum Verfolgen eines entfernten Zielfahrzeugs
- 101: Bereitstellen von Radarsensordaten und Sensordaten des Zielfahrzeugs
- 102: Identifizieren eines Rads des Zielfahrzeugs aus den Radarreflexionspunkten
- 103: Bereitstellen von ersten Raderfassungsdaten
- 104: Identifizieren eines Rads des Zielfahrzeugs aus den Lidarreflexionspunkten
- 105: Bereitstellen von zweiten Raderfassungsdaten
- 106: Zusammenführen der ersten und zweiten Raderfassungsdaten
- 107: Ermitteln eines Parameters des Zielfahrzeugs
- 108: Zuführen eines Parameters einem Verfolgungsfilter
- 109: Ermitteln von kollisionsrelevanten Daten

## Patentansprüche

1. Verfahren (100) zum Verfolgen eines entfernten Zielfahrzeugs (2) in einem Umgebungsbereich eines Kraftfahrzeugs (1) mittels einer Kollisionserkennungsvorrichtung des Kraftfahrzeugs (1) zur Erkennung einer bevorstehenden Kollision mit dem Zielfahrzeug (2) durch Fusion von Radarsensordaten eines als Radarsensor ausgebildeten ersten Umgebungssensors (5) mit Sensordaten eines zweiten Umgebungssensors (6) der Kollisionserkennungsvorrichtung, wobei der Radarsensor (5) und der zweite Umgebungssensor (6) jeweils Erfassungsbereiche (7, 8) aufweisen, welche sich derart überlappen, dass wenigstens ein Teilbereich des Zielfahrzeugs (2) durch beide Umgebungssensoren (5, 6) erfasst wird, und wobei das Verfahren (100) folgende Schritte umfasst:
- Bereitstellen (101) von Radarsensordaten und Sensordaten des Zielfahrzeugs (2) mittels des Radarsensors (5) und des zweiten Umgebungssensors (6), wobei aus den Radarsensordaten Radarreflexionspunkte abgeleitet werden, welche eine durch eine Entfernung und einen Azimutwinkel festgelegte Position und eine Dopplergeschwindigkeit von Punkten an dem Zielfahrzeug (2) bestimmen,
- Identifizieren (101) eines Rads (4a, 4b, 4c, 4d) des Zielfahrzeugs (2) aus den Radarreflexionspunkten,
- Bereitstellen (103) von ersten Raderfassungsdaten basierend auf dem aus den Radarreflexionspunkten identifizierten Rad (4a, 4b, 4c, 4d),
- Identifizieren (104) eines Rads (4a, 4b, 4c, 4d) des Zielfahrzeugs (2) aus den Sensordaten des zweiten Umgebungssensors (6) und Bereitstellen (105) von zweiten Raderfassungsdaten (12) basierend auf dem aus den Sensordaten identifizierten Rad (4a, 4b, 4c, 4d),
- Zusammenführen (106) der ersten Raderfassungsdaten und der zweiten Raderfassungsdaten, und
- Ermitteln eines Parameters (14) des Zielfahrzeugs (2) basierend auf den zusammengeführten ersten und zweiten Raderfassungsdaten,
**dadurch gekennzeichnet, dass** das Identifizieren (101) eines Rads (4a, 4b, 4c, 4d) umfasst, dass um jeden Radarreflexionspunkt jeweils ein einheitlich großes zweidimensionales Fenster mit einer Erstreckung in der Entfernungsdimension und der Azimutwinkeldimension gelegt und eine Summe der Varianzen der Dopplergeschwindigkeiten aller in dem Fenster enthaltenen Radarreflexionspunkte ermittelt und dem entsprechenden Radarreflexionspunkt zugeordnet wird, und dass ein Radarreflexionspunkt als ein Punkt eines Rads (4a, 4b, 4c, 4d) bestimmt wird, dessen zugeordnete Summe größer als ein vorgegebener Schwellwert ist.

2. Verfahren (100) nach Anspruch 1, wobei das Ableiten der Radarreflexionspunkte aus den Radarsensordaten folgende Schritte umfasst:
- Ermitteln von Radarreflexionspunkten mittels Fouriertransformation aus den Radarsensordaten,
- Trennen der Radarreflexionspunkte vom Rauschen der Radarsensordaten anhand eines CFAR-Filters, und
- Identifizieren der Radarreflexionspunkte, die von dem Zielfahrzeug reflektiert werden, durch ein Clusterverfahren, vorzugsweise ein DBSCAN-Verfahren.

3. Verfahren (100) nach Anspruch 1 oder 2, wobei die Ermittlung der Summe der Varianzen der Dopplergeschwindigkeiten aller in einem Fenster enthaltenen Radarreflexionspunkte folgende Schritte umfasst:
- Ermitteln eines arithmetischen Mittelwerts aus den Dopplergeschwindigkeiten aller in dem Fenster enthaltenen Radarreflexionspunkte,
- Ermitteln einer Varianz der Dopplergeschwindigkeit eines Radarreflexionspunkt als Differenz zwischen der Dopplergeschwindigkeit des Radarreflexionspunkts und dem Mittelwert jeweils für alle in dem Fenster enthaltenen Radarreflexionspunkte, und
- Bilden der Summe der ermittelten Varianzen der Dopplergeschwindigkeiten aller in dem Fenster enthaltenen Radarreflexionspunkte.

4. Verfahren (100) nach einem der vorhergehenden Ansprüche, wobei das Identifizieren (101) eines Rads (4a, 4b, 4c, 4d) des Zielfahrzeugs (2) aus den Radarreflexionspunkten weiter folgende Schritte umfasst:
- Zuordnen der als ein Punkt eines Rads (4a, 4b, 4c, 4d) bestimmten Radarreflexionspunkte zu einem Rad-Cluster durch ein Clusterverfahren, vorzugsweise ein DBSCAN-Verfahren, und
- Bestimmen des Rad-Clusters als ein Rad (4a, 4b, 4c, 4d) des Zielfahrzeugs (2).

5. Verfahren (100) nach Anspruch 4, wobei das Bereitstellen (103) von ersten Raderfassungsdaten folgende Schritte umfasst:
- Berechnen der Positionsdaten eines Radschwerpunkts basierend auf den einem Rad-Cluster zugeordneten Radarreflexionspunkten, und
- Bereitstellen der Positionsdaten des Radschwerpunkts als erste Raderfassungsdaten.

6. Verfahren (100) nach Anspruch 5, wobei das Bereitstellen (103) von ersten Raderfassungsdaten weiter folgende Schritte umfasst:
- Bestimmen eines Azimutwinkelwerts des dem Radschwerpunkt positionell nahegelegensten Radarreflexionspunktes,
- Zusammenfassen der Radarreflexionspunkte, die als Azimutwinkelwert den bestimmten Azimutwinkelwert aufweisen, in eine Gruppe,
- Ermitteln desjenigen Radarreflexionspunktes der Gruppe, der innerhalb der Gruppe einen relativ höchsten Intensitätswert aufweist und der zugleich nicht als ein Punkt eines Rads (4a, 4b, 4c, 4d) bestimmt wurde,
- Bereitstellen der Dopplergeschwindigkeit des ermittelten Radarreflexionspunktes als Geschwindigkeit des Zielfahrzeugs (2) an der Position des Radschwerpunkts als erste Raderfassungsdaten.

7. Verfahren (100) nach einem der vorhergehenden Ansprüche, wobei das Zusammenführen (106) der ersten Raderfassungsdaten und der zweiten Raderfassungsdaten folgende Schritte umfasst:
- Zuordnen der ersten Raderfassungsdaten und der zweiten Raderfassungsdaten jeweils einer Zielfahrzeugachse und einer Zielfahrzeugseite,
- Zusammenführen der einer gemeinsamen Zielfahrzeugachse und Zielfahrzeugseite zugeordneten ersten Raderfassungsdaten und zweiten Raderfassungsdaten basierend auf einem Covariance-Intersection-Algorithmus.

8. Verfahren (100) nach einem der vorhergehenden Ansprüche, welches ferner den Schritt eines Zuführens (108) des Parameters (14) einem Verfolgungsfilter zum Verfolgen des Zielfahrzeugs (2) umfasst.

9. Verfahren (100) nach Anspruch 8, wobei der Parameter (14) des Zielfahrzeugs (2) einem Unscented Kalman Filter als Verfolgungsfilter zugeführt wird, mittels welchem die aktuelle Position des Zielfahrzeugs (2) anhand des Parameters (14) geschätzt wird.

10. Verfahren (100) nach Anspruch 9, wobei der Parameter (14) des Zielfahrzeugs (2) mehreren verschiedenen Unscented Kalman-Filtern als Verfolgungsfilter zugeführt wird, wobei die mehreren verschiedenen Unscented Kalman-Filter jeweils auf einem unterschiedlichen Bewegungsmodell basieren.

11. Verfahren (100) nach einem der vorhergehenden Ansprüche, wobei der Parameter (14) des Zielfahrzeugs (2) ein geometrischer Schwerpunkt des Zielfahrzeugs (2) ist.

12. Verfahren (100) nach einem der vorhergehenden Ansprüche, wobei der zweite Umgebungssensor (6) als Lidarsensor ausgebildet ist, und wobei die Sensordaten Lidarreflexionspunkte (9) umfassen.

13. Verfahren (100) nach Anspruch 12, wobei das Identifizieren eines Rads (4a, 4b, 4c, 4d) des Zielfahrzeugs (2) aus den Sensordaten des Lidarsensors (6) ein Auswählen von Lidarreflexionspunkten (9) des Zielfahrzeugs (2) mit einer vorgegebenen maximalen Höhe über Grund umfasst, und wobei ein Rad (4a, 4b, 4c, 4d) nur basierend auf den ausgewählten Lidarreflexionspunkten (9) identifiziert wird.

14. Verfahren (100) nach Anspruch 13, wobei das Bereitstellen (105) von zweiten Raderfassungsdaten folgende Schritte umfasst:
- Identifizieren von ausgewählten Lidarreflexionspunkten (9), welche innerhalb eines vorgegebenen Abstands mindestens eine vorgegebene Anzahl von Nachbar-Lidarreflexionspunkten haben, als Kernpunkte,
- Identifizieren von ausgewählten Lidarreflexionspunkten (9), welche zu mindestens einem Kernpunkt höchstens den vorgegebenen Abstand haben, jedoch innerhalb des vorgegebenen Abstands weniger als die vorgegebene Anzahl von Nachbar-Lidarreflexionspunkten haben, als Randpunkte,
- Erkennen eines jeweiligen Segments (10) als von Randpunkten umgebener Bereich von Kernpunkten, wobei jedes Segment (10) einer Reifenlauffläche oder einer Reifenseitenwand zugeordnet ist,
- Anfitten einer jeweiligen Strecke (11) durch jedes Segment (10),
- Ermitteln eines jeweiligen Lots auf jede der Strecken mittig in der jeweiligen Strecke (11),
- Ermitteln eines Radmittelpunkts (12) als Schnittpunkt dieser Lote, und
- Bereitstellen der Positionsdaten des Radmittelpunkts (12) als zweite Raderfassungsdaten.

15. Verfahren (100) nach Anspruch 14, wobei das Bereitstellen (105) von zweiten Raderfassungsdaten ferner folgende Schritte umfasst:
- Ermitteln eines Radlenkwinkels des Zielfahrzeugs (2) basierend auf den angefitteten Strecken (11), und
- Bereitstellen des Radlenkwinkels als zweite Raderfassungstaten.

16. Verfahren (100) nach einem der Ansprüche 8 bis 15, welches ferner den Schritt eines Ermittelns (109) von kollisionsrelevanten Daten basierend auf der Verfolgung des Zielfahrzeugs (2) anhand des Parameters (14) umfasst.

17. Kollisionserkennungsvorrichtung für ein Kraftfahrzeug (1) zur Erkennung einer bevorstehenden Kollision mit einem entfernten Zielfahrzeug (2) mit einem als Radarsensor ausgebildeten ersten Umgebungssensor (5) und einem zweiten Umgebungssensor (6) sowie einem Steuergerät, wobei das Steuergerät hergerichtet ist, um das Verfolgen des entfernten Zielfahrzeugs (2) in einem Umgebungsbereich des Kraftfahrzeugs (1) anhand eines Verfahrens (100) nach mindestens einem der vorhergehenden Ansprüche durchzuführen.

## Claims

1. Method (100) for tracking a distant target vehicle (2) in an area surrounding a motor vehicle (1) by means of a collision detection device of the motor vehicle (1) for detecting an impending collision with the target vehicle (2) by fusing radar sensor data from a first surroundings sensor (5) designed as a radar sensor with sensor data from a second surroundings sensor (6) of the collision detection device, wherein the radar sensor (5) and the second surroundings sensor (6) each have capture ranges (7, 8) which overlap in such a way that at least one section of the target vehicle (2) is captured by both surroundings sensors (5, 6), and wherein the method (100) comprises the following steps:
- providing (101) radar sensor data and sensor data relating to the target vehicle (2) by means of the radar sensor (5) and the second surroundings sensor (6), wherein radar reflection points are derived from the radar sensor data and determine a position determined by a distance and an azimuth angle and a Doppler speed of points on the target vehicle (2),
- identifying (101) a wheel (4a, 4b, 4c, 4d) of the target vehicle (2) from the radar reflection points,
- providing (103) first wheel capture data based on the wheel (4a, 4b, 4c, 4d) identified from the radar reflection points,
- identifying (104) a wheel (4a, 4b, 4c, 4d) of the target vehicle (2) from the sensor data from the second surroundings sensor (6) and providing (105) second wheel capture data (12) based on the wheel (4a, 4b, 4c, 4d) identified from the sensor data,
- merging (106) the first wheel capture data and the second wheel capture data, and
- determining a parameter (14) of the target vehicle (2) based on the merged first and second wheel capture data, **characterized in that** the identification (101) of a wheel (4a, 4b, 4c, 4d) comprises placing in each case a two-dimensional window of uniform size and with an extent in the distance dimension and the azimuth angle dimension around each radar reflection point and determining a sum of the variances of the Doppler speeds of all radar reflection points contained in the window and assigning it to the corresponding radar reflection point, and determining a radar reflection point as a point of a wheel (4a, 4b, 4c, 4d) whose assigned sum is greater than a predefined threshold value.

2. Method (100) according to Claim 1, wherein the derivation of the radar reflection points from the radar sensor data comprises the following steps:
- determining radar reflection points from the radar sensor data by means of Fourier transformation,
- separating the radar reflection points from the noise of the radar sensor data using a CFAR filter, and
- identifying the radar reflection points reflected by the target vehicle by means of a cluster method, preferably a DBSCAN method.

3. Method (100) according to Claim 1 or 2, wherein the determination of the sum of the variances of the Doppler speeds of all radar reflection points contained in a window comprises the following steps:
- determining an arithmetic mean value from the Doppler speeds of all radar reflection points contained in the window,
- determining a variance of the Doppler speed of a radar reflection point as the difference between the Doppler speed of the radar reflection point and the mean value in each case for all radar reflection points contained in the window, and
- forming the sum of the determined variances of the Doppler speeds of all radar reflection points contained in the window.

4. Method (100) according to one of the preceding claims, wherein the identification (101) of a wheel (4a, 4b, 4c, 4d) of the target vehicle (2) from the radar reflection points further comprises the following steps:
- assigning the radar reflection points determined as a point of a wheel (4a, 4b, 4c, 4d) to a wheel cluster by means of a cluster method, preferably a DBSCAN method, and
- determining the wheel cluster as a wheel (4a, 4b, 4c, 4d) of the target vehicle (2).

5. Method (100) according to Claim 4, wherein the provision (103) of first wheel capture data comprises the following steps:
- calculating the position data for a wheel centre of gravity based on the radar reflection points assigned to a wheel cluster, and
- providing the position data for the wheel centre of gravity as first wheel capture data.

6. Method (100) according to Claim 5, wherein the provision (103) of first wheel capture data further comprises the following steps:
- determining an azimuth angle value of the radar reflection point positionally closest to the wheel centre of gravity,
- combining the radar reflection points having the determined azimuth angle value as the azimuth angle value in a group,
- determining that radar reflection point in the group which has a relatively highest intensity value within the group and which has not been simultaneously determined as a point of a wheel (4a, 4b, 4c, 4d),
- providing the Doppler speed of the determined radar reflection point as the speed of the target vehicle (2) at the position of the wheel centre of gravity as first wheel capture data.

7. Method (100) according to one of the preceding claims, wherein the merging (106) of the first wheel capture data and the second wheel capture data comprises the following steps:
- respectively assigning the first wheel capture data and the second wheel capture data to a target vehicle axis and to a target vehicle side,
- merging the first wheel capture data and second wheel capture data assigned to a common target vehicle axis and target vehicle side based on a covariance intersection algorithm.

8. Method (100) according to one of the preceding claims, further comprising the step of supplying (108) the parameter (14) to a tracking filter for tracking the target vehicle (2).

9. Method (100) according to Claim 8, wherein the parameter (14) of the target vehicle (2) is supplied to an unscented Kalman filter as a tracking filter, by means of which the current position of the target vehicle (2) is estimated based on the parameter (14).

10. Method (100) according to Claim 9, wherein the parameter (14) of the target vehicle (2) is supplied to multiple different unscented Kalman filters as tracking filters, wherein the multiple different unscented Kalman filters are each based on a different motion model.

11. Method (100) according to one of the preceding claims, wherein the parameter (14) of the target vehicle (2) is a geometric centre of gravity of the target vehicle (2).

12. Method (100) according to one of the preceding claims, wherein the second surroundings sensor (6) is designed as a lidar sensor, and wherein the sensor data comprise lidar reflection points (9).

13. Method (100) according to Claim 12, wherein the identification of a wheel (4a, 4b, 4c, 4d) of the target vehicle (2) from the sensor data from the lidar sensor (6) comprises selecting lidar reflection points (9) of the target vehicle (2) with a predefined maximum height above ground, and wherein a wheel (4a, 4b, 4c, 4d) is identified only based on the selected lidar reflection points (9).

14. Method (100) according to Claim 13, wherein the provision (105) of second wheel capture data comprises the following steps:
- identifying selected lidar reflection points (9), which have at least a predefined number of neighbouring lidar reflection points within a predefined distance, as core points,
- identifying selected lidar reflection points (9), which have at most the predefined distance from at least one core point, but have less than the predefined number of neighbouring lidar reflection points within the predefined distance, as edge points,
- identifying a respective segment (10) as an area of core points surrounded by edge points, each segment (10) being assigned to a tyre tread or a tyre sidewall,
- fitting a respective route (11) through each segment (10),
- determining a respective perpendicular to each of the routes in the centre of the respective route (11),
- determining a wheel centre point (12) as the point of intersection of these perpendiculars, and
- providing the position data relating to the wheel centre point (12) as second wheel capture data.

15. Method (100) according to Claim 14, wherein the provision (105) of second wheel capture data further comprises the following steps:
- determining a wheel steering angle of the target vehicle (2) based on the fitted routes (11), and
- providing the wheel steering angle as second wheel capture data.

16. Method (100) according to one of Claims 8 to 15, further comprising the step of determining (109) collision-relevant data based on the tracking of the target vehicle (2) based on the parameter (14).

17. Collision detection device for a motor vehicle (1) for detecting an impending collision with a distant target vehicle (2), having a first surroundings sensor (5) designed as a radar sensor and a second surroundings sensor (6) and a control unit, wherein the control unit is prepared to track the distant target vehicle (2) in an area surrounding the motor vehicle (1) by means of a method (100) according to at least one of the preceding claims.

## Revendications

1. Procédé (100) permettant de suivre un véhicule cible éloigné (2) dans une zone environnante d'un véhicule automobile (1) au moyen d'un dispositif de détection de collision du véhicule automobile (1) afin de détecter une collision imminente avec le véhicule cible (2) en fusionnant des données de capteur radar provenant d'un premier capteur d'environnement (5), réalisé sous forme de capteur radar, avec des données de capteur d'un deuxième capteur d'environnement (6) du dispositif de détection de collision, dans lequel le capteur radar (5) et le deuxième capteur d'environnement (6) présentent respectivement des zones de détection (7, 8) qui se chevauchent de telle sorte qu'au moins une zone partielle du véhicule cible (2) est acquise par les deux capteurs d'environnement (5, 6), et dans lequel le procédé (100) comprend les étapes suivantes consistant à :
- fournir (101) des données de capteur radar et des données de capteur du véhicule cible (2) au moyen du capteur radar (5) et du deuxième capteur d'environnement (6), dans lequel des points de réflexion radar sont déduits à partir des données de capteur radar et déterminent une position définie par une distance et un angle d'azimut et une vitesse Doppler de points sur le véhicule cible (2),
- identifier (101) une roue (4a, 4b, 4c, 4d) du véhicule cible (2) à partir des points de réflexion radar,
- fournir (103) des premières données de détection de roue sur la base de la roue (4a, 4b, 4c, 4d) identifiée à partir des points de réflexion de radar,
- identifier (104) une roue (4a, 4b, 4c, 4d) du véhicule cible (2) à partir des données de capteur du deuxième capteur d'environnement (6), et fournir (105) des deuxièmes données de détection de roue (12) sur la base de la roue (4a, 4b, 4c, 4d) identifiée à partir des données de capteur,
- fusionner (106) les premières données de détection de roue et les deuxièmes données de détection de roue, et
- établir un paramètre (14) du véhicule cible (2) sur la base des premières et deuxièmes données de détection de roue fusionnées, **caractérisé en ce que** l'identification (101) d'une roue (4a, 4b, 4c, 4d) comprend le fait qu'autour de chaque point de réflexion radar soit placée respectivement une fenêtre bidimensionnelle de taille homogène et s'étendant dans la direction de la distance et la direction d'angle d'azimut, et qu'une somme des variances des vitesses Doppler de tous les points de réflexion radar contenus dans la fenêtre soit établie et attribuée au point de réflexion radar correspondant, et qu'un point de réflexion radar soit déterminé comme un point d'une roue (4a, 4b, 4c, 4d) dont la somme associée est supérieure à une valeur seuil prédéfinie.

2. Procédé (100) selon la revendication 1, dans lequel la déduction des points de réflexion radar à partir des données de capteur radar comprend les étapes suivantes consistant à :
- établir des points de réflexion radar au moyen d'une transformation de Fourier à partir des données de capteur radar,
- séparer les points de réflexion radar du bruit des données de capteur radar à l'aide d'un filtre CFAR, et
- identifier par un procédé de nuées, de préférence un procédé DBSCAN, les points de réflexion radar qui ont été réfléchis par le véhicule cible.

3. Procédé (100) selon la revendication 1 ou 2, dans lequel l'établissement de la somme des variances des vitesses Doppler de tous les points de réflexion radar contenus dans une fenêtre comprend les étapes suivantes consistant à :
- établir une moyenne arithmétique à partir des vitesses Doppler de tous les points de réflexion radar contenus dans la fenêtre,
- établir une variance de la vitesse Doppler d'un point de réflexion radar comme la différence entre la vitesse Doppler du point de réflexion radar et la moyenne respectivement pour tous les points de réflexion radar contenus dans la fenêtre, et
- former la somme des variances établies des vitesses Doppler de tous les points de réflexion radar contenus dans la fenêtre.

4. Procédé (100) selon l'une quelconque des revendications précédentes, dans lequel l'identification (101) d'une roue (4a, 4b, 4c, 4d) du véhicule cible (2) à partir des points de réflexion radar comprend en outre les étapes suivantes consistant à :
- attribuer les points de réflexion radar déterminés comme un point d'une roue (4a, 4b, 4c, 4d) à une nuée de roue par un procédé de nuées, de préférence un procédé DBSCAN, et
- déterminer la nuée de roue comme une roue (4a, 4b, 4c, 4d) du véhicule cible (2).

5. Procédé (100) selon la revendication 4, dans lequel la fourniture (103) de premières données de détection de roue comprend les étapes suivantes consistant à :
- calculer les données de position d'un centre de gravité de roue sur la base des points de réflexion radar attribués à une nuée de roue, et
- fournir les données de position du centre de gravité de roue comme des premières données de détection de roue.

6. Procédé (100) selon la revendication 5, dans lequel la fourniture (103) de premières données de détection de roue comprend en outre les étapes suivantes consistant à :
- déterminer une valeur d'angle d'azimut du point de réflexion radar le plus proche en position au centre de gravité de roue,
- fusionner dans un groupe les points de réflexion radar qui présentent la valeur d'angle d'azimut déterminée comme valeur d'angle d'azimut,
- établir le point de réflexion radar du groupe qui présente une valeur d'intensité relativement la plus haute à l'intérieur du groupe, et qui en même temps n'a pas été déterminé comme un point de la roue (4a, 4b, 4c, 4d),
- fournir la vitesse Doppler du point de réflexion radar établi comme la vitesse du véhicule cible (2) dans la position du centre de gravité de roue comme des premières données de détection de roue.

7. Procédé (100) selon l'une quelconque des revendications précédentes, dans lequel la fusion (106) des premières données de détection de roue et des deuxièmes données de détection de roue comprend les étapes suivantes consistant à :
- attribuer les premières données de détection de roue et les deuxièmes données de détection de roue respectivement à un axe de véhicule cible ou à un côté de véhicule cible,
- fusionner les premières données de détection de roue et les deuxièmes données de détection de roue attribuées à un axe de véhicule cible et à un côté de véhicule cible communs sur la base d'un algorithme d'intersection de covariance.

8. Procédé (100) selon l'une quelconque des revendications précédentes qui comprend en outre l'étape consistant à amener (108) le paramètre (14) à un filtre de suivi pour suivre le véhicule cible (2).

9. Procédé (100) selon la revendication 8, dans lequel le paramètre (14) du véhicule cible (2) est amené à un filtre de Kalman sans parfum en tant que filtre de suivi au moyen duquel la position actuelle du véhicule cible (2) est estimée à l'aide du paramètre (14).

10. Procédé (100) selon la revendication 9, dans lequel le paramètre (14) du véhicule cible (2) est amené à plusieurs filtres de Kalman sans parfum différents comme filtre de suivi, les plusieurs filtres de Kalman sans parfum différents étant basés respectivement sur un modèle de mouvement différent.

11. Procédé (100) selon l'une quelconque des revendications précédentes, dans lequel le paramètre (14) du véhicule cible (2) est un barycentre du véhicule cible (2).

12. Procédé (100) selon l'une quelconque des revendications précédentes, dans lequel le deuxième capteur d'environnement (6) est réalisé sous forme de capteur lidar, et dans lequel les données de capteur comprennent des points de réflexion lidar (9).

13. Procédé (100) selon la revendication 12, dans lequel l'identification d'une roue (4a, 4b, 4c, 4d) du véhicule cible (2) à partir des données de capteur du capteur lidar (6) comprend une sélection de points de réflexion lidar (9) du véhicule cible (2) d'une hauteur maximale prédéfinie au-dessus du sol, et dans lequel la roue (4a, 4b, 4c, 4d) n'est identifiée que sur la base des points de réflexion lidar (9) sélectionnés.

14. Procédé (100) selon la revendication 13, dans lequel la fourniture (105) de deuxièmes données de détection de roue comprend les étapes suivantes consistant à :
- identifier des points de réflexion lidar (9) sélectionnés qui présentent à une distance prédéfinie au moins un nombre prédéfini de points de réflexion lidar voisins comme points principaux,
- identifier des points de réflexion lidar (9) sélectionnés qui présentent jusqu'à au moins un point principal au maximum la distance prédéfinie mais présentent à la distance prédéfinie moins que le nombre prédéfini de points de réflexion lidar voisins comme points marginaux,
- détecter un segment (10) respectif comme une zone de points principaux entourée de points marginaux, chaque segment (10) étant attribué à une bande de roulement ou à un flanc de pneu,
- ajuster un trajet (11) respectif par chaque segment (10),
- établir une verticale respective sur chacun des trajets de manière centrée sur le trajet (11) respectif,
- établir un centre de roue (12) comme point d'intersection de ces verticales, et
- fournir les données de position du centre de roue (12) comme des deuxièmes données de détection de roue.

15. Procédé (100) selon la revendication 14, dans lequel la fourniture (105) de deuxièmes données de détection de roue comprend en outre les étapes suivantes consistant à :
- établir un angle de braquage de roue du véhicule cible (2) sur la base des trajets ajustés (11), et
- fournir l'angle de braquage de roue comme des deuxièmes données de détection de roue.

16. Procédé (100) selon l'une quelconque des revendications 8 à 15, comprenant en outre l'étape consistant à établir (109) des données concernant une collision sur la base du suivi du véhicule cible (2) à l'aide du paramètre (14).

17. Dispositif de détection de collision pour un véhicule automobile (1) permettant de détecter une collision imminente avec un véhicule cible éloigné (2), comprenant un premier capteur d'environnement (5) réalisé comme un capteur radar et un deuxième capteur d'environnement (6) ainsi qu'un appareil de commande, l'appareil de commande étant conçu pour effectuer le suivi du véhicule cible éloigné (2) dans une zone environnante du véhicule automobile (1) à l'aide d'un procédé (100) selon au moins l'une quelconque des revendications précédentes.
